# EUROPEAN PATENT SPECIFICATION

(11) **EP 2 651 167 B1**
(45) Date of publication and mention of the grant of the patent: **20.12.2017**
(21) Application number: 13163156.6
(22) Date of filing: 10.04.2013
(51) Int. Cl.: H04W 72/04

(54) **Method and apparatus for transmitting and receiving a feedback signal in a mobile communication system**
Verfahren und Vorrichtung zum Senden und Empfangen von Rückmeldungssignals in einem mobilen Kommunikationssystem
Appareil et procédé de transmission et réception d'informations de retour dans un système de communications mobile

(30) Priority: 10.04.2012 US 201261622248 P
(43) Date of publication of application: 16.10.2013
(60) Divisional application: 14168661.8
(73) Proprietor: Samsung Electronics Co., Ltd., Gyeonggi-do 443-742 (KR)
(72) Inventor: Lee, Hyo-Jin, 443-742 Gyeonggi-do (KR); Kim, Youn-Sun, 443-742 Gyeonggi-do (KR); Kim, Ki-Il, 443-742 Gyeonggi-do (KR); Choi, Seung-Hoon, 443-742 Gyeonggi-do (KR)
(74) Representative: Nederlandsch Octrooibureau

(56) References cited:
- EP-A1- 2 587 876
- WO-A1-2012/023550
- WO-A2-2011/013990
- HUAWEI ET AL: "Resources for Interference Measurements", 3GPP DRAFT; R1-120983, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599295, [retrieved on 2012-03-20]

## Description

### 1. Field of the Invention

The present invention relates to a method and apparatus for generating a feedback signal in a cellular mobile communication system having a plurality of Base Stations (BSs), and more particularly, to a method and apparatus for efficiently transmitting and receiving a feedback signal in a Coordinated Multi-Point (CoMP) system in which a plurality of BSs cooperate to support downlink transmission to a User Equipment (UE).

### 2. Description of the Related Art

Mobile communication systems are being developed into high-speed, highquality wireless packet data communication systems in order to additionally provide data services and multimedia services beyond the traditional voiceoriented services. Recently, various mobile communication standards, such as High Speed Downlink Packet Access (HSDPA), High Speed Uplink Packet Access (HSUPA), Long Term Evolution (LTE), and LTE-Advanced (LTE-A) proposed by the 3^{rd} Generation Partnership Project (3GPP), High Rate Packet Data (HRPD) proposed by the 3GPP2, and Institute of Electrical and Electronics Engineers (IEEE) 802.16 are being developed to support high-speed, highquality wireless packet data transmission services.

LTE was developed to efficiently support high-speed wireless packet data transmission. LTE can maximize the capacity of a wireless system using various wireless access schemes. LTE-A is an evolution of LTE, which has an improved data transmission capability compared to LTE.

The 3G wireless packet data communication systems such as HSDPA, HSUPA and HRPD use such techniques as Adaptive Modulation and Coding (AMC) and channel-sensitive scheduling in order to improve transmission efficiency. In AMC and channel-sensitive scheduling, a transmitter applies a suitable Modulation and Coding Scheme (MCS) at the most efficient time determined based on a feedback of partial channel state information received from a receiver.

With the use of AMC, the transmitter can adjust the amount of transmission data according to the channel state. That is, if the channel state is poor, the transmitter reduces the amount of transmission data to adjust a reception error probability to a desired level. In a good channel state, the transmitter increases the amount of transmission data to adjust the reception error probability to a desired level, thereby ensuring efficient transmission of a large amount of information.

In addition, with the use of channel-sensitive scheduling resource management, the transmitter selectively services a user having a superior channel state among several users, thereby contributing to an increase in the system capacity, compared to the case where the transmitter allocates a channel to one user and services the user. Such an increase in system capacity is called 'multi-user diversity gain'. When AMC is used together with Multiple Input Multiple Output (MIMO), the function of determining the number of spatial layers or the rank of a transmission signal can be adopted. In this case, a wireless packet data communication system adopting AMC takes into account the number of layers for MIMO transmission as well as a coding rate and a modulation scheme in determining an optimum data rate.

In general, Orthogonal Frequency Division Multiple Access (OFDMA) is a technology that can increase capacity, compared to Code Division Multiple Access (CDMA). One of several reasons for increasing capacity in OFDMA is that frequency-domain scheduling is possible.

With the use of channel-sensitive scheduling, a capacity gain is obtained based on the property whereby a channel changes over time. Likewise, a greater capacity gain can be achieved by utilizing another property whereby a channel changes in frequency. In this context, replacing CDMA used in 2^{nd} Generation (2G) and 3G mobile communication systems with OFDMA for future-generation systems is a recent active study area. The 3GPP and 3GPP2 have started to work on standardization of an evolved system using OFDMA.

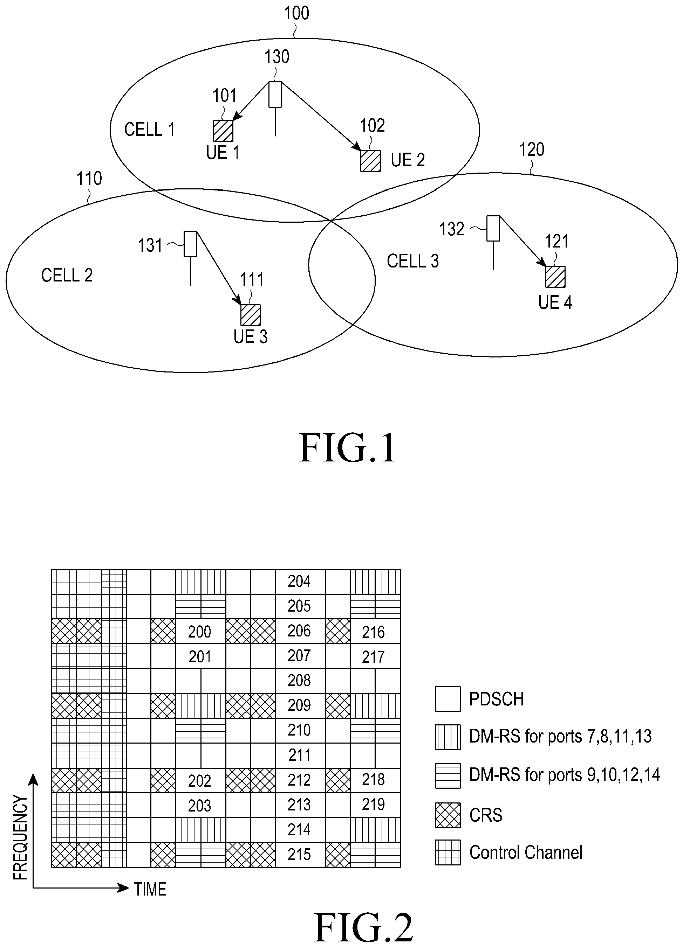

FIG. 1 illustrates a typical cellular mobile communication system where a Transmission (Tx)/Reception (Rx) antenna is deployed at the center of each cell.

Referring to FIG. 1, in a cellular mobile communication system having a plurality of cells, a specific User Equipment (UE) receives a mobile communication service using the afore-mentioned techniques from a selected cell during a semi-static time period. In FIG. 1, it is assumed that the cellular mobile communication system includes three cells 100, 110 and 120 (Cell 1, Cell 2 and Cell 3). Cell 1 provides the mobile communication service to UEs 101 and 102 (UE 1 and UE 2), Cell 2 provides the mobile communication service to a UE 111 (UE 3), and Cell 3 provides the mobile communication service to a UE 121 (UE 4). Antennas 130, 131 and 132 are deployed at the centers of the respective cells 100, 110, and 120. The antennas 130, 131, and 132 correspond in concept to BSs or relays.

UE 2 receiving the mobile communication service from Cell 1 is relatively far from the antenna 130, compared to UE 1. In addition, Cell 1 supports a relatively low data rate for UE 2 because UE 2 experiences severe interference from the antenna 132 at the center of Cell 3.

If Cell 1, Cell 2 and Cell 3 provide mobile communication services independently, they transmit Reference Signals (RSs) so that a downlink channel state may be measured on a cell basis. In the 3GPP LTE-A system, a UE measures a channel state between the UE and a BS using Channel State Information-Reference Signals (CSI-RSs) received from the BS.

FIG. 2 illustrates the positions of CSI-RSs transmitted from a BS to a UE in a typical LTE-A system.

Referring to FIG. 2, resources available in the LTE-A system are divided into equal-sized Resource Blocks (RBs). The horizontal axis and vertical axis of the resources represent time and frequency, respectively. Signals for two CSI-RS antenna ports may be transmitted in the resources of each of RBs 200 to 219. That is, the BS transmits two CSI-RSs for downlink measurement to the UE in the resources of the RB 200.

In a cellular mobile communication system having a plurality of cells as illustrated in FIG. 1, an RB at a different position is allocated to each cell and CSI-RSs are transmitted in the resources of the allocated RB. For example, in FIG. 1, Cell 1 may transmit CSI-RSs in the resources of the RB 200, Cell 2 may transmit CSI-RSs in the resources of the RB 205, and Cell 3 may transmit CSI-RSs in the resources of the RB 210. The reason for allocating different RBs (i.e. different time and frequency resources) for CSI-RS transmission to different cells is to prevent mutual interference between CSI-RSs transmitted from the different cells.

A UE estimates a downlink channel using CSI-RSs, generates a Rank Indicator (RI), a Channel Quality Indicator (CQI), and a Precoding Matrix Index (PMI) as CSI of the estimated downlink channel, and feeds back the CSI to a BS. There are four modes defined for periodic CSI feedback on a Physical Uplink Control Channel (PUCCH) from a UE.
1. Mode 1-0: RI, wideband CQI (wCQI)
2. Mode 1-1: RI, wCQI, wideband PMI (wPMI)
3. Mode 2-0: RI, wCQI, subband CQI (sCQI)
4. Mode 2-1: RI, wCQI, wPMI, sCQI, sPMI

The feedback timing of each piece of information in the four feedback modes is determined according to N_{pd}, N_{OFFSET,CQI}, M_{RI}, and N_{OFFSET,RI} indicated by higher-layer signaling. In Mode 1-0, the transmission period of a wCQI is N_{pd} and the feedback timing of the wCQI is determined using a subframe offset of N_{OFFSET,CQI}. In addition, the transmission period and offset of an RI are N_{pd}·M_{RI} and N_{OFFSET,CQI}+N_{OFFSET,RI}, respectively.

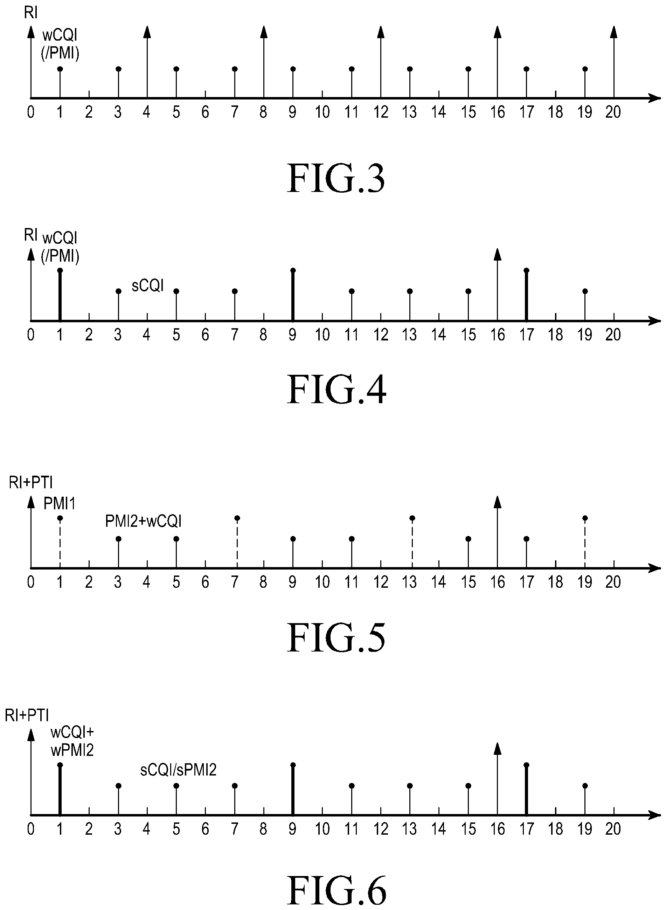

FIG. 3 illustrates the feedback timings of an RI, a wCQI, and a PMI under the condition that N_{pd}=2, M_{RI}=2, N_{OFFSET,CQI}=1, and N_{OFFSET,RI}=-1. Each transmission timing is represented as a subframe index. Mode 1-1 is the same as Mode 1-0 in feedback timing but different from Mode 1-0 in that a PMI is transmitted together with a wCQI at the transmission timing of the wCQI.

In Mode 2-0, the feedback period and offset of an sCQI are N_{pd} and N_{OFFSET,CQI}, respectively. The feedback period of a wCQI is H·N_{pd} and the offset of the wCQI is equal to that of the sCQI, N_{OFFSET,CQI}. Herein, H=J·K+1, where K is a value indicated by higher-layer signaling and J is a value determined according to a system bandwidth. For instance, J is 3 for a 10-MHz system. Thus a wCQI is transmitted, substituting for an sCQI at every H sCQI transmissions. The feedback period and offset of an RI are M_{RI}·H·N_{pd} and N_{OFFSET,CQI}+ N_{OFFSET,RI}, respectively.

FIG. 4 illustrates the feedback timings of an RI, an sCQI, and a wCQI under the condition that N_{pd}=2, M_{RI}=2, J=3 (10MHz), K=1, N_{OFFSET,CQI}=1, and N_{OFFSET,RI}=-1. Mode 2-1 is the same as Mode 2-0 in feedback timing but different from Mode 2-0 in that a PMI is transmitted together with a wCQI at the transmission timing of the wCQI.

The above-described feedback timings are set for 4 or fewer CSI-RS antenna ports. For 8 CSI-RS antenna ports, two PMIs should be fed back, unlike the above cases. For 8 CSI-RS antenna ports, Mode 1-1 is further divided into two submodes. A first PMI is transmitted together with an RI and a second PMI is transmitted together with a wCQI in a first submode. The feedback period and offset of the RI and the first PMI are defined as M_{RI}·N_{pd} and N_{OFFSET,CQI}+N_{OFFSET,RI}, respectively, and the feedback period and offset of a wCQI and a second PMI are defined as N_{pd} and N_{OFFSET,CQI}, respectively.

For 8 CSI-RS antenna ports, a Precoding Type Indicator (PTI) is added in Mode 2-1. The PTI is transmitted together with an RI in a period of M_{RI}·H·N_{pd} with an offset of N_{OFFSET,CQI}+N_{OFFSET,RI}. If the PTI is 0, first and second PMIs and a wCQI are fed back. The wCQI and the second PMI are transmitted at the same timing in a period of N_{pd} with an offset of N_{OFFSET,CQI}. The feedback period and offset of the first PMI are H'·N_{pd} and N_{OFFSET,CQI}, respectively. H' is indicated by higher-layer signaling. On the other hand, if the PTI is 1, the PTI and the RI are transmitted together and the wCQI and the second PMI are transmitted together. The sCQI is additionally fed back. In this case, the first PMI is not transmitted. The PTI and the RI have the same feedback period and offset as those of the PTI and RI in the case where the PTI is 0. The feedback period and offset of the sCQI are defined as N_{pd} and N_{OFFSET,CQI}, respectively. The wCQI and the second PMI are fed back in a period of H·N_{pd} with an offset of N_{OFFSET,CQI}. H is the same as that for 4 CSI-RS antenna ports. FIGs. 5 and 6 illustrate transmission timings when PTI=0 and PTI=1 under the condition that N_{pd}=2, M_{RI}=2, J=3(10MHz), K=1, H'=3, N_{OFFSET,CQI}=1, and N_{OFFSET,RI}=-1.

The conventional CSI feedback technology is based on the premise that a UE transmits a single CSI feedback, with no regard to a multi-CSI feedback situation for CoMP transmission; that is, simultaneous transmissions from a plurality of transmission points.

In the cellular mobile communication system illustrated in FIG. 1, there are limitations in supporting a high data rate for a UE at a cell edge because the UE is severely interfered with by other cells. That is, high data rates provided to UEs within a cell are significantly affected by the locations of the UEs in the cell in the cellular mobile communication system as illustrated in FIG. 1. Accordingly, a UE relatively near to the center of a cell (UE 1) can transmit and receive signals at a high data rate, whereas a UE relatively remote from the center of the cell (UE 2) cannot transmit and receive signals at a high data rate in the conventional cellular mobile communication system.

WO 2011 / 013 990 A2 discusses transmitting a CSI-RS for measuring a transmission channel according to each antenna and a data signal in a broadband wireless communication system based on a MIMO scheme through a plurality of antennas. A base station may indicate a CSI-RS period and a CSI-RS offset to the UE, and may indicate a pattern of subframes to which CSI-RSs are transmitted within a CSI-RS period in the form of a bitmap.

EP 2 608 598 A1 relates to signaling of CSI-RS location positions in a resource block. A bitmap-based muting resource notification method is disclosed.

EP 2 587 876 A1 includes determining a number of bits of an aperiodic feedback indicator based on a number of feedback allocations to a UE, the UE receiving the feedback indicator and interpreting the indicator based on the number of bits, and performing aperiodic feedback of at least one feedback allocation, based on the feedback indicator. The present invention is disclosed in combination with the independent claims. Additional advantageous embodiments are disclosed in the appended dependent Claims. In accordance with a first example there is provided a method for receiving a feedback signal by a central control device in a mobile communication system, in which information about at least one CSI-RS and information about at least one IMR are transmitted to a UE, bitmap information is transmitted to the UE, which indicates at least one feedback signal to be received from among a plurality of feedback signals available according to the information about the at least one CSI-RS and the information about the at least one IMR, and the at least one feedback signal is received from the UE according to the bitmap information. The bitmap information includes bits in a one-to-one correspondence with the plurality of feedback signals, and a feedback signal corresponding to a bit having a predetermined value among the bits of the bitmap information is determined as the feedback signal to be transmitted by the UE.

In accordance with another example there is provided a UE in a mobile communication system, in which a communication module receives information about at least one CSI-RS and information about at least one IMR and receives bitmap information indicating at least one feedback signal to be transmitted from among a plurality of feedback signals available according to the information about the at least one CSI-RS and the information about the at least one IMR, and a controller controls the communication module to generate the at least one feedback signal to be transmitted according to the bitmap information and transmit the generated at least one feedback signal. The bitmap information includes bits in a one-to-one correspondence with the plurality of feedback signals, and a feedback signal corresponding to a bit having a predetermined value among the bits of the bitmap information is determined as the feedback signal to be transmitted.

In accordance with a further example there is provided a central control device in a mobile communication system, in which a communication module transmits information about at least one CSI-RS and information about at least one IMR to a UE, and a controller controls the communication module to transmit to the UE bitmap information indicating at least one feedback signal to be received from among a plurality of feedback signals available according to the information about the at least one CSI-RS and the information about the at least one IMR, and receive the at least one feedback signal according to the bitmap information from the UE. The bitmap information includes bits in a one-to-one correspondence with the plurality of feedback signals, and a feedback signal corresponding to a bit having a predetermined value among the bits of the bitmap information is determined as the feedback signal to be transmitted by the UE.

### BRIEF DESCRIPTION OF THE DRAWINGS

The above and other objects, features and advantages of certain embodiments of the present invention will be more apparent from the following detailed description taken in conjunction with the accompanying drawings, in which:
FIG. 1 illustrates a typical cellular mobile communication system where a Transmission (Tx)/Reception (Rx) antenna is deployed at the center in each cell;
FIG. 2 illustrates the positions of Channel State Information-Reference Signals (CSI-RSs) that Base Stations (BSs) transmit to a User Equipment (UE) in a typical Long Term Evolution-Advanced (LTE-A) system;
FIG. 3 illustrates feedback timings of a UE in Mode 1-0 or Mode 1-1 in the typical LTE-A system;
FIG. 4 illustrates feedback timings of the UE in Mode 2-0 or Mode 2-1 in the typical LTE-A system;
FIG. 5 illustrates feedback timings of the UE in Mode 2-1 for 8 CSI-RS antenna ports when a Precoding Type Indicator (PTI) is 0 in the typical LTE-A system;
FIG. 6 illustrates feedback timings of the UE in Mode 2-1 for 8 CSI-RS antenna ports when the PTI is 1 in the typical LTE-A system;
FIG. 7 illustrates the configuration of a cellular mobile communication system according to an embodiment of the present invention;
FIG. 8 illustrates the positions of CSI-RSs that BSs transmit to a UE according to an embodiment of the present invention;
FIG. 9 is a flowchart illustrating an operation of the UE according to an embodiment of the present invention;
FIG. 10 is a flowchart illustrating an operation of a central control device according to an embodiment of the present invention;
FIG. 11 is a block diagram of the UE according to an embodiment of the present invention; and
FIG. 12 is a block diagram of the central control device according to an embodiment of the present invention.

Throughout the drawings, the same drawing reference numerals will be understood to refer to the same elements, features and structures.

### DETAILED DESCRIPTION OF EMBODIMENTS OF THE INVENTION

Reference will be made to embodiments of the present invention with reference to the attached drawings. A detailed description of generally known functions and structures of the present invention will be avoided should they obscure the subject matter of the present invention. In addition, although the terms used in the present invention are selected from generally known and used terms, the terms may be changed according to the intention of a user or an operator, or according to custom. Therefore, the present invention must be understood, not simply by the actual terms used, but by the meanings of each term lying within.

While embodiments of the present invention will be described in detail in the context of an Orthogonal Frequency Division Multiplexing (OFDM) wireless communication system, particularly conforming to the 3^{rd} Generation Partnership Project (3GPP) Evolved UMTS Terrestrial Radio Access (EUTRA) standard, it will be understood by those skilled in the art that the subject matter of the present invention is applicable to other communication systems having a similar technical background and channel configuration with slight modifications made without departing much from the scope and spirit of the present invention.

A cellular mobile communication system is configured by deploying a plurality of cells in a limited area. Each cell is provided with Base Station (BS) equipment performing mobile communication within the cell. The BS equipment provides a mobile communication service to User Equipments (UEs) within the cell. A specific UE receives the mobile communication service only from one semi-statically determined cell. This system is called a non-Coordinated Multi-Point (non-CoMP) system.

In the non-CoMP system, the data rates of UEs within a cell vary according to their locations in the cell. A UE at a cell center may have a high data rate, whereas a UE at a cell edge may have a low data rate.

The opposite concept of the non-CoMP system is a CoMP system. In the CoMP system, a plurality of cells coordinate data transmission to a UE located at a cell edge. Therefore, a better-quality mobile communication service can be provided to the UE, compared to the non-CoMP system. The present invention provides a method and apparatus for transmitting a feedback signal in a CoMP system, taking into account Dynamic cell Selection (DS), Dynamic cell Selection with Dynamic Blanking (DS/DB), and Joint Transmission (JT). In DS, a UE measures a channel state on a cell basis and transmits a feedback signal related to the measured channel states to a BS. Then the BS dynamically selects a cell that will transmit downlink data to the UE. In DS/DB, a specific cell discontinues data transmission, to thereby mitigate interference with another cell. JT is a technique of simultaneously transmitting data from a plurality of cells to a specific UE. That is, to overcome the problems associated with the prior art, the present invention provides a feedback structure so as to efficiently apply DS, DS/DB, or JT to the LTE-A system.

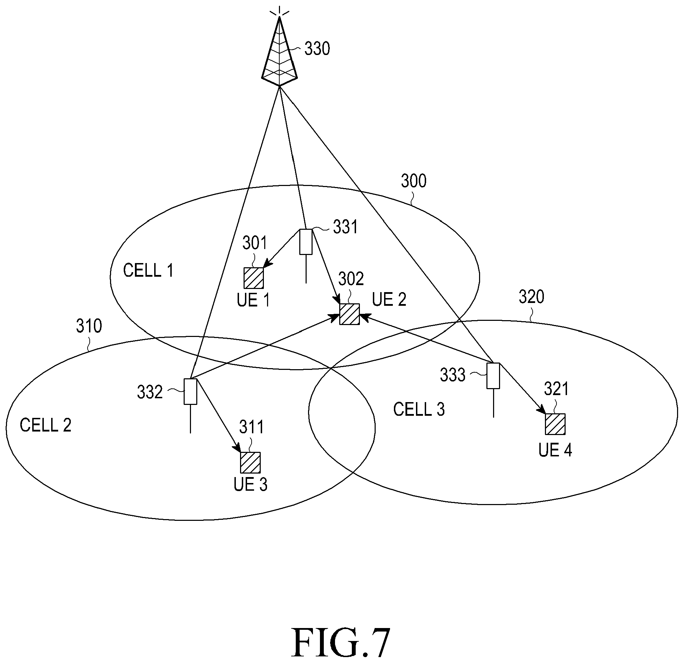

FIG. 7 illustrates the configuration of a cellular mobile communication system according to an embodiment of the present invention. In FIG. 7, it is assumed that the cellular mobile communication system includes three cells 300, 310 and 320 (Cell 1, Cell 2 and Cell 3). In an embodiment of the present invention, a cell refers to a data transmission area that a specific transmission point can service. Each transmission point may be a Remote Radio Head (RRH) sharing a cell Identifier (ID) with a macro BS within a macro area or a macrocell or picocell having a different cell ID.

A central control device is a device that transmits and receives data to and from a UE and processes the transmission data and received data. If each transmission point is an RRH sharing a cell ID with a macro BS, the macro BS may be called a central control device. In contrast, if each transmission point is a macrocell or picocell having a different cell ID, a device that manages cells integrally may be called a central control device.

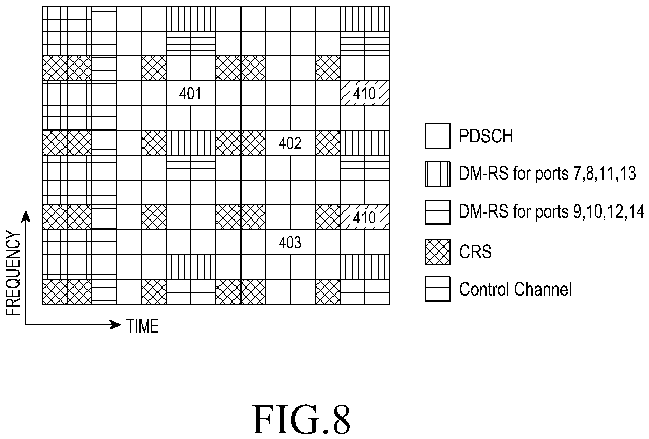

Referring to FIG. 7, in the cellular mobile communication system, first, third and fourth UEs 301, 311 and 321 (UE 1, UE 3 and UE 4) receive data from their nearest cells among Cell 1, Cell 2 and Cell 3, whereas a second UE 302 (UE 2) receives data from Cell 1, Cell 2 and Cell 3 by CoMP. UE 1, UE 3 and UE 4, which receive data from their nearest cells, estimate channels using Channel State Information-Reference Signals (CSI-RSs) received from the cells and transmit a related feedback signal to a central control device 330. On the other hand, UE 2 should estimate all of channels received from Cell 1, Cell 2 and Cell 3 because it receives data from Cell 1, Cell 2 and Cell 3 by CoMP. Accordingly, the central control device 330 allocates resources for three CSI-RSs corresponding to the three cells 300, 310 and 320 to UE 2, for channel estimation at UE 2. A method for allocating CSI-RSs to UE 2 by the central control device 330 will be described below with reference to FIG. 8.

FIG. 8 illustrates the positions of CSI-RSs that BSs transmit to a UE according to an embodiment of the present invention.

Referring to FIG. 8, the central control device 330 allocates resources 401, 402 and 403 to three CSI-RSs and transmits the CSI-RSs in the allocated resources 401, 402 and 403 so that UE 2 for which CoMP transmission is supported can estimate channels from the three cells 300, 310 and 320 and channels carrying control information and system information. That is, reference numeral 401 denotes resources allocated to a CSI-RS used for channel estimation of Cell 1, reference numeral 402 denotes resources allocated to a CSI-RS used for channel estimation of Cell 2, and reference numeral 403 denotes resources allocated to a CSI-RS used for channel estimation of Cell 3. A set of resources allocated to at least one CSI-RS transmitted for channel estimation at a CoMP UE or a set of cells corresponding to the CSI-RS resources is called a measurement set.

The central control device 330 may allocate additional resources for interference measurement to UE 2. The amount of data per unit time that UE 2 can receive is affected by the magnitude of interference as well as the strength of a signal. Accordingly, the central control device 330 may additionally allocate an Interference Measurement Resource (IMR) dedicated to interference measurement to UE 2 so that UE 2 may accurately measure interference. A BS may allocate one IMR to a UE so that the UE may measure the magnitude of common interference involved in the signal components of all CSI-RSs of a measurement set. Alternatively, the BS may allocate a plurality of IMRs to the UE so that the UE may measure interference in various situations.

Referring to FIG. 8, UE 2 measures signals received from the three cells 300, 310, and 320 using the allocated three CSI-RS resources 401, 402 and 403, and measures interference involved in the signals received from the three cells 300, 310 and 320 using an allocated IMR 410. The BS controls signal transmissions of neighbor cells using the IMR 410 so that much of interference with UE 2 may be reflected in the IMR 410.

In the case where a measurement set including a plurality of cells and one or more IMRs are allocated to a UE, the present invention considers the types of feedback signals to be transmitted to a BS and a method for generating and transmitting a feedback signal.

### Embodiment 1

When a measurement set including a plurality of cells and one or more IMRs are allocated to a UE, a first feedback method is provided that the UE generates and transmits all possible feedback signals regarding every signal and interference case to a BS. For example, if the measurement set allocated to the UE is {CSI-RS-1, CSI-RS-2}, CSI-RS-1 and CSI-RS-2 are CSI-RSs are transmitted by Cell-1 and Cell-2, respectively, the BS allocates one IMR to the UE, and the allocated IMR reflects interference from cells other than the cells of the measurement set, the UE generates FeedBacks (FBs) signals regarding four possible signal and interference cases as illustrated in Table 1.

**Table 1**

| | Signal component | Interference | Considerations |
|---|---|---|---|
| FB 1 | Cell-1 | IMR+Cell-2 | No blanking |
| FB 2 | Cell-1 | IMR | Blanking of Cell-2 |
| FB 3 | Cell-2 | IMR+Cell-1 | No blanking |
| FB 4 | Cell-2 | IMR | Blanking of Cell-1 |

In Table 1, IMR+Cell-2 means that the sum of interference that the UE measures in the IMR and interference that the UE measures in CSI-RS-2 received from Cell 2 is a feedback signal for FB 1. That is, FB 1 includes a CSI feedback for the case where a signal is received from Cell-1 and Cell-2 and cells reflected in the IMR other than the cells of the measurement set cause interference.

FB 2 includes a CSI feedback signal for the case where a signal is received from Cell-1, and only cells other than the cells of the measurement set cause interference because Cell-2 is in blanking state and thus does not transmit a signal. The CSI of FB 1 and FB 2 may include individual RIs, PMIs and CQIs or a common RI, a common PMI, and individual CQIs.

Similarly, FB 3 and FB 4 commonly include a CSI feedback signal for the case where a signal is received from Cell-2, and FB 3 and FB 4 are for the cases of blanking of Cell-1 and non-blanking of Cell-1, respectively. FB 3 and FB 4 may have individual RIs, individual PMIs, and individual CQIs or a common RI, a common PMI, and individual CQIs. That is, the FB signals may be designed to have a common RI and a common PMI for the same signal component and separate CQIs for different interference situations.

### Embodiment 2

Because a UE should generate a feedback signal for every possible signal and interference case and transmit the feedback signal to a BS in Embodiment 1, the UE may generate and transmit an unnecessary feedback signal to the BS. Moreover, in the presence of many CSI-RSs in a measurement set or in the presence of many IMRs, the UE may cause a large feedback overhead. For example, if the UE operates regarding a measurement set including three CSI-RSs and one IMR according to Embodiment 1, it should generate and transmit 12 feedback signals, thus causing a large uplink overhead.

In this context, another embodiment of the present invention provides a method in which a BS indicates a necessary feedback signal to a UE and the UE generates and transmits only the necessary feedback signal to the BS, rather than the UE generating and transmiting all feedback signals for all possible signal and interference cases to the BS.

The simplest method is that the BS transmits to the UE bits indicating whether the UE is supposed to transmit each of all possible feedback signals to the BS. Table 2 below illustrates a method for indicating a feedback signal required for a BS to a UE, when a measurement set size is 2 and one IMR is allocated to the UE.

**Table 2**

| | Signal component | Interference | Considerations | Feedback indication bitmap |
|---|---|---|---|---|
| FB 1 | Cell-1 | IMR+Cell-2 | No blanking | 1 |
| FB 2 | Cell-1 | IMR | Blanking of Cell-2 | 0 |
| FB 3 | Cell-2 | IMR+Cell-1 | No Blanking | 1 |
| FB 4 | Cell-2 | IMR | Blanking of Cell-1 | 0 |

Upon receipt of a feedback indication bitmap illustrated in the last column of Table 2 from the BS, the UE generates only FB 1 and FB 3 corresponding to bits set to '1' in the feedback indication bitmap and transmits FB 1 and FB 3 to the BS. In this case, the BS does not consider blanking of the allocated cells.

If a measurement set of size 3 and one IMR are allocated to the UE, 12 feedback signals are available to the UE as illustrated in Table 3 and a feedback indication bitmap may be 12 bits to represent the 12 feedback signals.

**Table 3**

| | Signal component | Interference | Considerations | Feedback indication bitmap |
|---|---|---|---|---|
| FB 1 | Cell-1 | IMR+Cell-2+Cell-3 | No blanking | 1 |
| FB 2 | Cell-1 | IMR+Cell-2 | Blanking of Cell-3 | 0 |
| FB 3 | Cell-1 | IMR+Cell-3 | Blanking of Cell-2 | 0 |
| FB 4 | Cell-1 | IMR | Blanking of Cell-2 and Cell-3 | 0 |
| FB 5 | Cell-2 | IMR+Cell-1+Cell-3 | No blanking | 1 |
| FB 6 | Cell-2 | IMR+Cell-1 | Blanking of Cell-3 | 0 |
| FB 7 | Cell-2 | IMR+Cell-3 | Blanking of Cell-1 | 0 |
| FB 8 | Cell-2 | IMR | Blanking of Cell-1 and Cell-3 | 0 |
| FB 9 | Cell-3 | IMR+Cell-1+ Cell-2 | No blanking | 1 |
| FB 10 | Cell-3 | IMR+Cell-1 | Blanking of Cell-2 | 0 |
| FB 11 | Cell-3 | IMR+Cell-2 | Blanking of Cell-1 | 0 |
| FB 12 | Cell-3 | IMR | Blanking of Cell-2 and Cell-3 | 0 |

In Table 3, IMR+Cell-2+Cell-3 means that the sum of interference that the UE measures in the IMR, interference that the UE measures in CSI-RS-2 received from Cell 2, and interference that the UE measures in CSI-RS-3 received from Cell 3 is a feedback signal for FB 1. Upon receipt of a feedback indication bitmap illustrated in the last column of Table 3, the UE generates a feedback signal indicated by '1' in the feedback indication bitmap, that is, only FB 1, FB 5 and FB 9 and transmits FB 1, FB 5 and FB 9 to the BS. In this case, the BS does not consider blanking of the allocated cells.

While the BS indicates a feedback signal to be transmitted by the UE by a bitmap in Table 2 and Table 3, in another embodiment the BS transmits FB numbers to the UE, when allocating feedback signals to the UE, so that the UE may recognize feedback signals to be generated. For example, when a measurement set of size 3 and one IMR are allocated to the UE, the BS transmits FB numbers 1 and 3 to the UE, while allocating two feedback signals to the UE. Then the UE generates only FB 1 and FB 3 in Table 3. Alternatively, the BS may transmit information about CSI-RSs to be used as signal components and information about CSI-RSs to be used as interference to the UE, while allocating feedback signals to the UE, so that the UE may recognize feedback signals to be generated. For example, if the BS allocates two feedback signals to the UE, indicating that first feedback signal should be generated, taking into account CSI-RS-1 as a signal and the IMR and CSI-RS-2 as interference, and second feedback signal should be generated, taking into account CSI-RS-2 as a signal and the IMR and CSI-RS-1 as interference, the UE generates and transmits FB 2 and FB 6 in Table 3.

In another method, a feedback signal that every UE should transmit may be preset and a bitmap indicating whether to transmit an additional feedback signal may be used, instead of a bitmap indicating all feedback signals transmittable from a UE. For example, FB 4, FB 8 and FB 12 reflecting blanking of all cells included in a measurement set may be preset as feedback signals to be generated and transmitted by every UE having a measurement set of size 3 in Table 3, and a 9-bit bitmap indicating whether to additionally generate and transmit the other feedback signals may be used.

On the other hand, FB 1, FB 5 and FB 9 that do not reflect blanking of the allocated cells may be preset as feedback signals to be generated/transmitted by every UE and generation and transmission of additional feedback signals may be indicated by a 9-bit bitmap. For example, in Table 2 for a measurement set of size 2, FB 1 and FB 3 may be preset as basic feedback signals to be transmitted, while FB 2 and FB 4 may be set as additional feedback signals to be generated/transmitted. In an opposite case, FB 2 and FB 4 may be preset as basic feedback signals to be transmitted, while FB 1 and FB 3 may be set as additional feedback signals to be generated/transmitted. The feedback signals to be additionally generated and transmitted may be indicated by a 2-bit bitmap.

In a further feedback signal indicating method, a feedback signal is indicated by using feedback indication information of a specific bit. For example, if the feedback indication information is a 1 bit, the BS may determine feedback signals when the feedback indication information is 0, and feedback signals when the feedback indication information is 1. Refer to Table 2, if the feedback indication information is 0, FB 1, FB 2, FB 3 and FB 4 are may be indicated, and if the feedback indication information is 1, FB 1 and FB 3 are may be indicated.

The UE may determine feedback signals to be transmitted by identifying the feedback indication information transmitted by Radio Resource Control (RRC) signaling. For example, if the feedback indication information is 0, the UE may determine FB 1, FB 2, FB 3 and FB 4 as feedback signals to be transmitted, and if the feedback indication information is 1, the UE may determines FB 1 and FB 3 as feedback signals to be transmitted. And then, the UE generates the determined feedback signals, and transmits the generated feedback signals to the BS.

Meanwhile, the feedback indication information may be more than the 1 bit. In this case, feedback signals capable of generate/delivery according to the number of corresponding bits may be determined. Information on the feedback signals may be predetermined or signaled from the BS to the UE by the RRC signaling.

In another example, it is assumed that a measurement set of size 2 {CSI-RS-1, CSI-RS-2} and two IMRs {IMR-1, IMR-2} are allocated to the UE and CSI-RS-1 and CSI-RS-2 are received from Cell-1 and Cell-2. Each of the allocated IMRs is an interference measurement resource reflecting a different interference situation. The BS may indicate feedback signals that the UE needs to transmit by a bitmap in the manner illustrated in Table 4 below.

**Table 4**

| | Signal component | Interference | Feedback indication bitmap |
|---|---|---|---|
| FB 1 | Cell-1 | IMR-1+Cell-2 | 1 |
| FB 2 | Cell-1 | IMR-1 | 0 |
| FB 3 | Cell-1 | IMR-2+Cell-2 | 1 |
| FB 4 | Cell-1 | IMR-2 | 0 |
| FB 5 | Cell-2 | IMR-1+Cell-1 | 1 |
| FB 6 | Cell-2 | IMR-1 | 0 |
| FB 7 | Cell-2 | IMR-2+Cell-1 | 1 |
| FB 8 | Cell-2 | IMR-2 | 0 |

In Table 4, IMR-1+Cell-2 means that the UE considers the sum of interference measured in IMR-1 and interference measured in CSI-RS-2 received from Cell-2 to be a feedback signal for FB 1. Upon receipt of a feedback indication bitmap illustrated in the last column of Table 4, the UE generates and transmits only FB 1, FB 3, FB 5 and FB 7 to the BS. When a plurality of IMRs are used, various feedback indication methods as illustrated in Table 2 and Table 3 as well as a bitmap scheme are available. That is, when feedback signals are allocated, feedback numbers may be indicated. Alternatively, CSI-RSs for signal components and CSI-RSs for interference components may be indicated for feedback signals. Also, feedback signals may be indicated by RRC signaling. In addition, while feedback signals to be always generated and transmitted are preset, only additional feedback signals is indicated by a bitmap having a reduced number of bits.

Table 5 illustrates available feedback types, in the case where a measurement set of size 3 {CSI-RS-1, CSI-RS-2, CSI-RS-3} and two IMRs {IMR-1, IMR-2} are allocated to the UE and CSI-RS-1, CSI-RS-2 and CSI-RS-3 are received from Cell-1, Cell-2 and Cell 3, respectively. The afore-described feedback indication methods are also applicable to this case.

**Table 5**

| | Signal component | Interference | Feedback indication bitmap |
|---|---|---|---|
| FB 1 | Cell-1 | IMR-1+Cell-2+Cell-3 | 1 |
| FB 2 | Cell-1 | IMR-1+Cell-2 | 0 |
| FB 3 | Cell-1 | IMR-1+Cell-3 | 0 |
| FB 4 | Cell-1 | IMR-1 | 0 |
| FB 5 | Cell-1 | IMR-2+Cell-2+Cell-3 | 1 |
| FB 6 | Cell-1 | IMR-2+Cell-2 | 0 |
| FB 7 | Cell-1 | IMR-2+Cell-3 | 0 |
| FB 8 | Cell-1 | IMR-2 | 0 |
| FB 9 | Cell-2 | IMR-1+ Cell-1+Cell-3 | 1 |
| FB 10 | Cell-2 | IMR-1+Cell-1 | 0 |
| FB 11 | Cell-2 | IMR-1+Cell-3 | 0 |
| FB 12 | Cell-2 | IMR-1 | 0 |
| FB 13 | Cell-2 | IMR-2+ Cell-1+Cell-3 | 1 |
| FB 14 | Cell-2 | IMR-2+Cell-1 | 0 |
| FB 15 | Cell-2 | IMR-2+Cell-3 | 0 |
| FB 16 | Cell-2 | IMR-2 | 0 |
| FB 17 | Cell-3 | IMR-1+Cell-2+Cell-3 | 1 |
| FB 18 | Cell-3 | IMR-1+Cell-2 | 0 |
| FB 19 | Cell-3 | IMR-1+Cell-3 | 0 |
| FB 20 | Cell-3 | IMR-1 | 0 |
| FB 21 | Cell-3 | IMR-2+Cell-1+Cell-2 | 1 |
| FB 22 | Cell-3 | IMR-2+Cell-1 | 0 |
| FB 23 | Cell-3 | IMR-2+Cell-2 | 0 |
| FB 24 | Cell-3 | IMR-2 | 0 |

### Embodiment 3

Another embodiment of the present invention provides a method in which a BS indicates a CSI-RS for use in interference measurement in addition to a measurement set to a UE so that the CSI-RS is dedicated to the usage of calculating the amount of interference.

For example, it is assumed that the BS allocates a measurement set {CSI-RS-1, CSI-RS-2}, one IMR, and a CSI-RS for interference measurement, CSI-RS-3 to the UE and CSI-RS-1, CSI-RS-2 and CSI-RS-3 are received from Cell-1, Cell-2 and Cell-3, respectively. Then, signal and interference situations as those illustrated in Table 6 may be considered.

**Table 6**

| | Signal component | Interference | Feedback indication bitmap |
|---|---|---|---|
| FB 1 | Cell-1 | IMR+Cell-2 | 1 |
| FB 2 | Cell-1 | IMR | 0 |
| FB 3 | Cell-1 | IMR+Cell-2-Cell-3 | 1 |
| FB 4 | Cell-1 | IMR-Cell-3 | 0 |
| FB 5 | Cell-2 | IMR+Cell-1 | 1 |
| FB 6 | Cell-2 | IMR | 0 |
| FB 7 | Cell-2 | IMR+Cell-1-Cell-3 | 1 |
| FB 8 | Cell-2 | IMR-Cell-3 | 0 |

In Table 6, IMR+Cell-2-Cell-3 means that the result of subtracting interference measured in CSI-RS-3 from the sum of interference measured in the IMR and interference measured in CSI-RS-2 should be reflected as interference for FB 3. The BS uses this method to reflect only the effects of interference from a specific cell by allocating an additional CSI-RS as a non-signal component to the UE. The feedback indication methods of Embodiment 2 such as a bitmap scheme are also available to the case of Table 6.

### Embodiment 4

A further example provides a method in which a BS indicates a CSI-RS of a cell that can be blanked in a measurement set to a UE so that the UE may select feedback signals to be considered.

For example, it is assumed that the BS allocates a measurement set {CSI-RS-1, CSI-RS-2} and one IMR to the UE and CSI-RS-1 and CSI-RS-2 are received from Cell-1 and Cell-2, respectively. Although the UE is supposed to consider all possible signal and interference situations as illustrated in Table 2, if the BS indicates to the UE that Cell-1 can be blanked, the UE may recognize that Cell-2 cannot be blanked and thus determines that FB 2 of Table 2 does not need to be transmitted. Accordingly, the UE generates and transmits the other feedback signals except for FB 2 in Table 2. This method is also applicable to the case of a measurement set of size 3 and the case of two IMRs. The same thing applies to the case of transmitting information about a blanking-unavailable cell instead of information about a blanking-available cell.

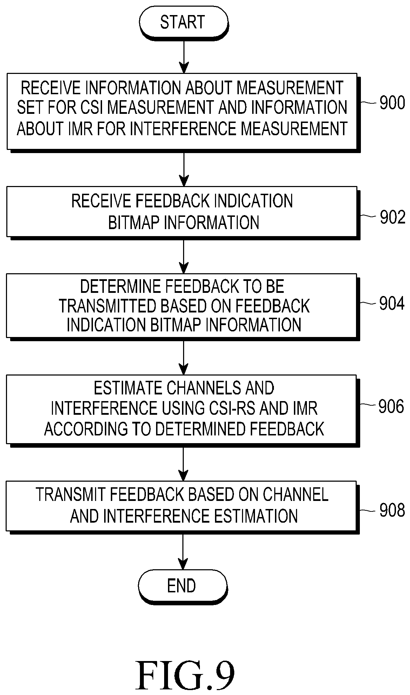

FIG. 9 is a flowchart illustrating an operation of the UE according to an embodiment of the present invention.

Referring to FIG. 9, the UE receives information about allocation of a measurement set for CSI measurement and an IMR for interference measurement from the central control device in step 900. The UE then receives feedback indication bitmap information from the central control device in step 902. The feedback indication bitmap information is information taking the form of a bitmap indicating feedback signals to be transmitted among a plurality of feedback signals transmittable according to the allocated measurement set and the IMR.

In step 904, the UE determines feedback signals to be transmitted based on the feedback indication bitmap information. The UE estimates channels and interference, taking into account CSI-RSs and the IMR based on the determined feedback signals in step 906 and transmits feedback signals resulting from the channel and interference estimation to the central control device in step 908.

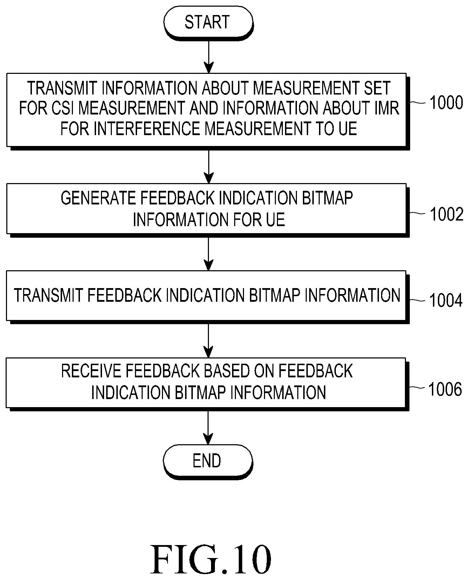

FIG. 10 is a flowchart illustrating an operation of the central control device according to an embodiment of the present invention.

Referring to FIG. 10, the central control device allocates a measurement set for CSI measurement and an IMR for interference measurement and transmits information about the allocated measurement set and IMR to the UE in step 1000. The central control device then generates feedback indication bitmap information for the UE in step 1002. The feedback indication bitmap information may be generated in the manner described before in Embodiment 1 to Embodiment 4.

In step 1004, the central control device transmits the generated feedback indication bitmap information to the UE. The central control device receives feedback signals based on the feedback indication bitmap information from the UE in step 1006.

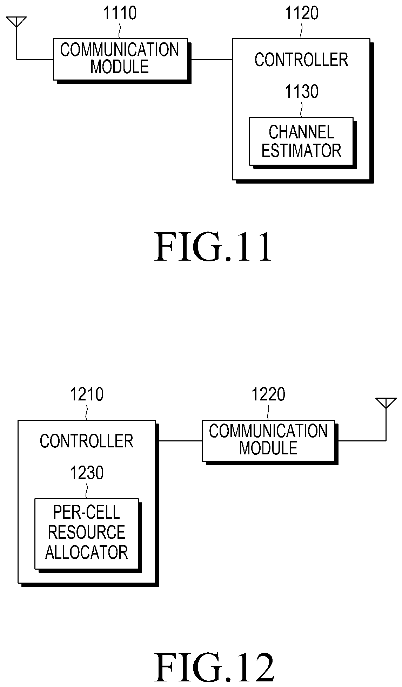

With reference to FIGs. 11 and 12, the interior structures of the UE and the central control device according to embodiments of the present invention will be described below.

FIG. 11 is a block diagram of the UE according to an embodiment of the present invention.

Referring to FIG. 11, the UE includes a communication module 1110 and a controller 1120.

The communication module 1110 transmits or receives data externally. The communication module 1110 may transmit channel information for CoMP to the central control device under the control of the controller 1120.

The controller 1120 controls the states and operations of all components in the UE. The controller 1120 selects feedback signals for coordinated communication according to information shared between the UE and cells and feeds back channel information about selected cells to the central control device. For this purpose, the controller 1120 includes a channel estimator 1130.

The channel estimator 1130 determines feedback signals to be transmitted according to measurement set information (i.e. feedback indication bitmap information) received from the central control device and estimates signals and interference using received CSI-RSs and an IMR. The channel estimator 1130 may feedback CoMP-related channel information to the central control device by controlling the communication module 1110.

While the UE is shown as including the communication module 1110 and the controller 1120, the UE is not limited to this specific configuration. That is, the UE may further include many other components according to their functions. For example, the UE may additionally include a display for displaying the current state of the UE, an input unit for receiving a signal such as a function execution command from a user, and a memory for storing data generated in the UE.

FIG. 12 is a block diagram of the central control device according to an embodiment of the present invention.

The central control device includes a controller 1210 and a communication module 1220.

The controller 1210 controls the states and operations of all components in the central control device. The controller 1210 allocates CSI-RSs of respective cells and an IMR to resources, for channel estimation at the UE. For this purpose, the controller 1210 further includes a per-cell resource allocator 1230.

The per-cell resource allocator 1230 allocates resources to CSI-RSs for channel estimation on a cell basis at the UE and transmits CSI-RSs in the allocated resources. Resources allocated on a cell basis are allocated in correspondence with CSI-RSs for channel estimation on a cell basis. In addition, the per-cell resource allocator 1230 allocates an appropriate IMR to each UE so that interference may be reflected well in the IMR.

The communication module 1220 transmits and receives data to and from the UE or a managed cell. The communication module 1220 transmits the CSI-RSs and the IMR to the UE in the allocated resources and receives feedback signals including channel information from the UE.

As is apparent from the above description of the present invention, neighbor cells can transmit data to a UE at a cell edge in cooperation with each other by CoMP in a cellular mobile communication system. Further, the cells can provide an improved mobile communication service, compared to non-cooperative transmission in the cellular mobile communication system.

When a UE is located at a cell edge, the UE can dynamically determine a cell from which it intends to receive data. Some cells that cause severe interference can turn off their power in order to allow neighbor cells to help the cell-edge UE. In addition, a plurality of cells can transmit information simultaneously to the cell-edge UE, thereby increasing the information reception rate of the UE. Therefore, every UE can acquire a high data rate irrespective of its location within a cell in the cellular mobile communication system.

While the present invention has been particularly shown and described with reference to certain embodiments thereof, it will be understood by those of ordinary skill in the art that various changes in form and details may be made therein without departing from the scope of the present invention as defined by the following claims.

## Claims

1. A method by a User Equipment, UE, for transmitting channel state information, CSI, in a mobile communication system, the method comprising:
receiving (900, 902) feedback control information related to a plurality of CSI feedbacks; and
transmitting (908) at least one CSI corresponding to at least one among the plurality of CSI feedbacks based on the feedback control information,
the method **characterized in that**:
the plurality of CSI feedbacks are defined based on channel state information reference signals, CSI-RSs, for channel measurement and interference measurement resources, IMRs, for interference measurement,
wherein a CSI is computed based the channel measurement and the interference measurement,
wherein the feedback control information includes feedback indication for indicating the at least one among the plurality of CSI feedbacks, and
wherein the feedback indication is a binary value, and a first binary value is associated with a first set of CSI feedback and a second binary value is associated with a second set of CSI feedback.

2. The method of claim 1, wherein the feedback indication includes bitmap information including bits for indicating the at least one among the plurality of CSI feedbacks.

3. The method of claim 2, wherein the bits for indicating the at least one among the plurality of CSI feedbacks have predetermined values.

4. The method of claim 1, wherein the feedback indication includes index information corresponding to the at least one among the plurality of CSI feedbacks.

5. The method of claim 1, wherein the CSI comprises at least one of a channel quality indicator, CQI, a precoding matrix index, PMI, and a rank indicator, RI, corresponding to the at least one among the plurality of CSI feedbacks.

6. A method by a central control device for receiving channel state information, CSI, in a mobile communication system, the method comprising:
transmitting (1000, 1004) information related to a plurality of CSI feedbacks; and
receiving (1006) at least one CSI corresponding to at least one among the plurality of CSI feedbacks based on the feedback control information, the method **characterized in that**:
the plurality of CSI feedbacks are defined based on channel state information reference signals, CSI-RSs, for channel measurement and interference measurement resources, IMRs, for interference measurement,
wherein a CSI is computed based the channel measurement and the interference measurement,
wherein the feedback control information includes feedback indication for indicating the at least one among the plurality of CSI feedbacks, and
wherein the feedback indication is a binary value, and a first binary value is associated with a first set of CSI feedback and a second binary value is associated with a second set of CSI feedback.

7. The method of claim 6, wherein the feedback indication includes bitmap information including bits for indicating the at least one among the plurality of CSI feedbacks.

8. The method of claim 7, wherein the bits for indicating the at least one among the plurality of CSI feedbacks have predetermined values.

9. The method of claim 6, wherein the feedback indication includes index information corresponding to the at least one among the plurality of CSI feedbacks.

10. The method of claim 6, wherein the CSI comprises at least one of a channel quality indicator, CQI, a precoding matrix index, PMI, and a rank indicator, RI, corresponding to the at least one among the plurality of CSI feedbacks.

11. A user equipment, UE (302), in a mobile communication system, wherein the UE is configured to perform operations of any one of the methods described in claims 1 to 5.

12. A central control device in a mobile communication system, wherein the central control device is configured to perform operations of any one of the methods described in claims 6 to 10.

## Patentansprüche

1. Verfahren zum Senden von Kanalzustandsinformationen, CSI, in einem mobilen Kommunikationssystem durch eine Benutzereinrichtung, UE, wobei das Verfahren umfasst:
Empfangen (900, 902) von Rückmeldungssteuerungsinformationen, die auf mehrere CSI-Rückmeldungen bezogen sind, und
Senden (908) mindestens einer CSI, die mindestens einer unter den mehreren CSI-Rückmeldungen entspricht, auf Basis der Rückmeldungssteuerungsinformationen, wobei
das Verfahren **dadurch gekennzeichnet ist, dass**:
die mehreren CSI-Rückmeldungen auf Basis von Kanalzustandsinformations-Referenzsignalen, CSI-RSs, für eine Kanalmessung und Interferenzmessressourcen, IMRs, für eine Interferenzmessung festgelegt sind,
wobei eine CSI auf Basis der Kanalmessung und der Interferenzmessung berechnet wird,
wobei die Rückmeldungssteuerungsinformationen eine Rückmeldungsanzeige aufweisen, um die mindestens eine unter den mehreren CSI-Rückmeldungen anzuzeigen, und
wobei die Rückmeldungsanzeige ein Binärwert ist und wobei ein erster Binärwert mit einer ersten CSI-Rückmeldungsgruppe verbunden ist und ein zweiter Binärwert mit einer zweiten CSI-Rückmeldungsgruppe verbunden ist.

2. Verfahren nach Anspruch 1, wobei die Rückmeldungsanzeige Bitmapinformationen aufweist, die Bits aufweisen, um die mindestens eine unter den mehreren CSI-Rückmeldungen anzuzeigen.

3. Verfahren nach Anspruch 2, wobei die Bits vorgegebene Werte für die Anzeige der mindestens einen unter den mehreren CSI-Rückmeldungen aufweisen.

4. Verfahren nach Anspruch 1, wobei die Rückmeldungsanzeige Indexinformationen aufweist, die der mindestens einen unter den mehreren CSI-Rückmeldungen entsprechen.

5. Verfahren nach Anspruch 1, wobei die CSI mindestens eines von einer Kanalqualitätsanzeige, CQI, einem Vorcodierungsmatrixindex, PMI, und einer Ranganzeige, RI, umfasst, die der mindestens einen unter den mehreren CSI-Rückmeldungen entsprechen.

6. Verfahren zum Empfangen von Kanalzustandsinformationen, CSI, in einem mobilen Kommunikationssystem durch eine zentrale Steuerungseinrichtung, wobei das Verfahren umfasst:
Senden (1000, 1004) von Informationen, die auf mehrere CSI-Rückmeldungen bezogen sind, und
Empfangen (1006) mindestens einer CSI, die mindestens einer unter den mehreren CSI-Rückmeldungen entspricht, auf Basis der Rückmeldungssteuerungsinformationen, wobei
das Verfahren **dadurch gekennzeichnet ist, dass**:
die mehreren CSI-Rückmeldungen auf Basis von Kanalzustandsinformations-Referenzsignalen, CSI-RSs, für eine Kanalmessung und Interferenzmessressourcen, IMRs, für eine Interferenzmessung festgelegt sind,
wobei eine CSI auf Basis der Kanalmessung und der Interferenzmessung berechnet wird,
wobei die Rückmeldungssteuerungsinformationen eine Rückmeldungsanzeige aufweisen, um die mindestens eine unter den mehreren CSI-Rückmeldungen anzuzeigen, und
wobei die Rückmeldungsanzeige ein Binärwert ist und wobei ein erster Binärwert mit einer ersten CSI-Rückmeldungsmenge verbunden ist und ein zweiter Binärwert mit einer zweiten CSI-Rückmeldungsmenge verbunden ist.

7. Verfahren nach Anspruch 6, wobei die Rückmeldungsanzeige Bitmapinformationen aufweist, die Bits aufweisen, um die mindestens eine unter den mehreren CSI-Rückmeldungen anzuzeigen.

8. Verfahren nach Anspruch 7, wobei die Bits vorgegebene Werte für die Anzeige der mindestens einen unter den mehreren CSI-Rückmeldungen aufweisen.

9. Verfahren nach Anspruch 6, wobei die Rückmeldungsanzeige Indexinformationen aufweist, die der mindestens einen unter den mehreren CSI-Rückmeldungen entsprechen.

10. Verfahren nach Anspruch 6, wobei die CSI mindestens eines von einer Kanalqualitätsanzeige, CQI, einem Vorcodierungsmatrixindex, PMI, und einer Ranganzeige, RI, umfasst, die der mindestens einen unter den mehreren CSI-Rückmeldungen entsprechen.

11. Benutzereinrichtung, UE (302), in einem mobilen Kommunikationssystem, wobei die UE eingerichtet ist, Arbeitsgänge nach einem der Verfahren auszuführen, die in den Ansprüchen 1 bis 5 beschrieben sind.

12. Zentrale Steuerungseinrichtung in einem mobilen Kommunikationssystem, wobei die zentrale Steuerungseinrichtung eingerichtet ist, Arbeitsgänge nach einem der Verfahren auszuführen, die in den Ansprüchen 6 bis 10 beschrieben sind.

## Revendications

1. Procédé, par un équipement d'utilisateur, UE, pour transmettre des informations d'état de canal, CSI, dans un système de communication mobile, le procédé comprenant :
la réception (900, 902) d'informations de commande de rétroaction relatives à une pluralité de rétroactions de CSI ; et
la transmission (908) d'au moins une CSI correspondant à au moins l'une de la pluralité de rétroactions de CSI sur la base des informations de commande de rétroaction,
le procédé étant **caractérisé en ce que** :
la pluralité de rétroactions de CSI sont définies sur la base de signaux de référence d'informations d'état de canal, CSI-RS, pour une mesure de canal et de ressources de mesure d'interférence, IMR, pour une mesure d'interférence,
dans lequel une CSI est calculée sur la base de la mesure de canal et de la mesure d'interférence,
dans lequel les informations de commande de rétroaction comprennent une indication de rétroaction pour indiquer l'au moins une parmi la pluralité de rétroactions de CSI, et
dans lequel l'indication de rétroaction est une valeur binaire, et une première valeur binaire est associée à un premier ensemble de rétroactions de CSI et une deuxième valeur binaire est associée à un deuxième ensemble de rétroactions de CSI.

2. Procédé selon la revendication 1, dans lequel l'indication de rétroaction comprend des informations de bitmap comprenant des bits pour indiquer l'au moins une parmi la pluralité de rétroactions de CSI.

3. Procédé selon la revendication 2, dans lequel les bits pour indiquer l'au moins une parmi la pluralité de rétroactions de CSI ont des valeurs prédéterminées.

4. Procédé selon la revendication 1, dans lequel l'indication de rétroaction comprend des informations d'indice correspondant à l'au moins une parmi la pluralité de rétroactions de CSI.

5. Procédé selon la revendication 1, dans lequel les CSI comprennent au moins l'un d'un indicateur de qualité de canal, CQI, d'un indice de matrice de précodage, PMI, et d'un indicateur de rang, RI, correspondant à l'au moins une parmi la pluralité de rétroactions de CSI.

6. Procédé par un dispositif de commande central pour recevoir des informations d'état de canal, CSI, dans un système de communication mobile, le procédé comprenant :
la transmission (1000, 1004) d'informations relatives à une pluralité de rétroactions de CSI ; et
la réception (1006) d'au moins une CSI correspondant à au moins l'une de la pluralité de rétroactions de CSI sur la base des informations de commande de rétroaction,
le procédé étant **caractérisé en ce que** :
la pluralité de rétroactions de CSI sont définies sur la base de signaux de référence d'informations d'état de canal, CSI-RS, pour une mesure de canal et de ressources de mesure d'interférence, IMR, pour une mesure d'interférence,
dans lequel une CSI est calculée sur la base de la mesure de canal et de la mesure d'interférence,
dans lequel les informations de commande de rétroaction comprennent une indication de rétroaction pour indiquer l'au moins une parmi la pluralité de rétroactions de CSI, et
dans lequel l'indication de rétroaction est une valeur binaire, et une première valeur binaire est associée à un premier ensemble de rétroactions de CSI et une deuxième valeur binaire est associée à un deuxième ensemble de rétroactions de CSI.

7. Procédé selon la revendication 6, dans lequel l'indication de rétroaction comprend des informations de bitmap comprenant des bits pour indiquer l'au moins une parmi la pluralité de rétroactions de CSI.

8. Procédé selon la revendication 7, dans lequel les bits pour indiquer l'au moins une parmi la pluralité de rétroactions de CSI ont des valeurs prédéterminées.

9. Procédé selon la revendication 6, dans lequel l'indication de rétroaction comprend des informations d'indice correspondant à l'au moins une parmi la pluralité de rétroactions de CSI.

10. Procédé selon la revendication 6, dans lequel les CSI comprennent au moins l'un d'un indicateur de qualité de canal, CQI, d'un indice de matrice de précodage, PMI, et d'un indicateur de rang, RI, correspondant à l'au moins une parmi la pluralité de rétroactions de CSI.

11. Equipement d'utilisateur, UE, (302) dans un système de communication mobile, dans lequel l'UE est configuré pour effectuer des opérations selon l'un quelconque des procédés des revendications 1 à 5.

12. Dispositif de commande central dans un système de communication mobile, dans lequel le dispositif de commande central est configuré pour effectuer des opérations selon l'un quelconque des procédés des revendications 6 à 10.
